# FASCICULE DE BREVET EUROPEEN

(11) **EP 0 537 101 B1**
(45) Date de publication et mention de la délivrance du brevet: **15.11.1995**
(21) Numéro de dépôt: 92480140.0
(22) Date de dépôt: 28.09.1992
(51) Int. Cl.: A61C 8/00

(54) **Implant dentaire à pénétration verticale, conçu pour s'adapter aux différents degrés de dureté de l'os**
Vertikal eindringendes Zahnimplantat, ausgerüstet zur Anpassung an die verschiedenen Härtegrade der Knochen
Vertical penetrating dental implant, provided for adaptation to different degrees of bone hardness

(30) Priorité: 10.10.1991 FR 9112717
(43) Date de publication de la demande: 14.04.1993
(73) Titulaire: SCORTECCI, Gerard, F-06000 Nice (FR)
(72) Inventeur: SCORTECCI, Gerard, F-06000 Nice (FR)
(74) Mandataire: Hautier, Jean-Louis

(56) Documents cités:
- DE-U- 8 903 050
- DE-U- 9 001 596
- GB-A- 2 210 795

## Description

L'invention a pour objet un implant dentaire, à pénétration verticale, conçu pour s'adapter aux différents degrés de dureté de l'os.

L'implant selon l'invention peut être inséré selon quatre modes différents, en fonction de la dureté de l'os.
Os très dense : l'implant selon l'invention est mis en place par vissage doux après taraudage de l'os.
Os dense : l'implant selon l'invention est mis en place par autotaraudage.
Os moyennement dense : l'implant selon l'invention est mis en place impactage vissage.
Os peu dense : l'implant selon l'invention est mis en place par impactage.

C'est le seul implant cylindrique et/ou cylindro conique à insertion axiale capable de posséder l'ensemble des propriétés nécessaires pour être placé selon les quatre modes cités ci-dessus et ce, en fonction de la dureté de l'os.

*L'état de la technique peut être défini par les brevets suivants :*
- *FR-A-2.636.832 : "Cet implant est constitué par une pièce tronconique dans la face de révolution extérieure de laquelle est ménagé un filetage conique et présentant un alésage axial tronconique débouchant à son extrémité de grand diamètre et destiné à recevoir un pivot tronconique de forme complémentaire solidaire de la prothèse considérée, des moyens étant prévus pour* *permettre le vissage de cet implant dans un logement préalablement foré et taraudé dans l'os de la mâchoire du patient auquel est destinée cette prothèse."*
- *FR-A-2.634.369 : "Son premier élément est réalisé sous la forme d'une spirale creusée d'un alésage central surmontée d'une embase débordante qui vient se disposer au niveau de la gencive et dont le diamètre est calculé pour recevoir à la fois un faux moignon et la dent prothétique qui repose sur ce dernier sans débordement par rapport à ladite embase."*
- *FR-A-2.610.191 : "L'implant intraosseux selon l'invention est constitué d'un corps cylindrique destiné à être placé dans un puits foré dans une paroi osseuse après ouverture des tissus mous, le corps cylindrique étant doté d'un logement axial destiné à recevoir une pièce d'obturation après la pose de l'implant et avant la fermeture des tissus mous et ledit logement axial recevant après enlèvement de la pièce d'obturation un moignon qui porte la prothèse. L'implant selon l'invention se caractérise en ce qu'il est doté à la partie inférieure de son corps et dans le prolongement de celui-ci d'au moins une paroi mince et ajourée."*
- *EP-0126.624 : "Un implant dentaire fixe, destiné au maxillaire, comportant deux parties jointes, l'une est prévue avec un filetage externe pour être vissé dans le maxillaire et un trou central autour d'un axe dans lequel une extrémité de l'autre partie qui porte une prothèse dentaire est introduite. Une fermeture est prévue dans la première partie, la deuxième partie étant introduite dans la première, de façon que les stries aillent au-delà et coopérent avec la fermeture pour permettre un certain mouvement axial, comme dans la dent naturelle. Une fermeture supplémentaire est prévue entre les surfaces opposées de la première partie et la prothèse pour donner un effet d'amortissement. Des crans sont formés pour faciliter l'enlèvement de l'implant si nécessaire."*
- *GB-2.210.795 (formant le préambule de la revendication 1) : L'implant buccal présente la forme d'un cylindre comportant une extrémité proximale plate et une extrémité distale arrondie. Des parties en saillie sont formées sur la surface cylindrique et elles sont inclinées depuis l'extrémité proximale du corps cylindrique vers son extrémité distale. Les parties en saillie sont radialement espacées et des stries sont pratiquées sur la surface inclinée. Un trou de perforation latéral* *est pratiqué à l'extrémité distale du corps cylindrique. L'extrémité proximale comprend un évidement de forme hexagonale pour la réception d'un outil permettant d'exercer une torsion.*

*Application à la réalisation de fondations pour des prothèses dentaires.*
- *DE-U-8903050.8 : Implant à vis pour la fixation d'une prothèse dentaire, avec une partie filetée pouvant être vissée dans une mâchoire et avec un pilier support occlusif qui comporte une tête, un col ainsi qu'un filetage axial intérieur, caractérisé par le fait que la partie filetée est réalisée avec un diamètre augmentant régulièrement à partir de son extrémité libre, qu'entre le col et l'extrémité libre, elle est pourvue d'une cannelure parallèle à l'axe, et qu'au passage entre le col de forme générale cylindrique et la tête pourvue d'un pourtour de forme extérieure polygonale, est prévu un épaulement dont le diamètre est plus grand que ceux du col et de la tête.*
- *DE-U-9001596.7: Implant à vis cylindrique autotaraudeur caractérisé par le fait que :*
   *1. la partie entièrement cylindrique (environ 1/4 de la longueur totale) comporte un trou taraudé avec un chanfrein d'engagement et deux encoches diamétralement opposées, pour l'insertion, avec vissage, de différents éléments intrabucaux, ou pour l'engagement d'un outil pour le vissage*
   *2. la partie entièrement cylindrique est lisse et polie, et l'élément vis qui lui fait suite est rugueux ou enduit*
   *3. la partie en forme de vis (environ 3/4 de la longueur totale), pour ce qui concerne les éléments constituant le filetage, va en s'amincissant légèrement en allant vers le bas, mais que le noyau, de diamètre plus faible, s'amincit lui plus fortement*
   *4. l'extrémité de la vis est arrondie et n'est pas autoforeuse*
   *5. la partie en forme de vis comporte deux rainures longitudinales, fraisées également dans le corps du noyau, disposées obliquement par rapport à l'axe longitudinal*
   *6. les spires du filetage ainsi interrompues sont affûtées, tranchantes, à leur extrémité avant (dans le sens de rotation correspondant au vissage).*

L'implant selon l'invention est le seul implant cylindrique et/ou cylindro conique à insertion axiale capable de posséder l'ensemble des propriétés nécessaires pour être placé selon un ou plusieurs des quatre modes décrits précédemment. Dans les autres systèmes, un seul mode est généralement possible, deux à la rigueur. C'est pourquoi la plupart des systèmes propose plusieurs modes de réalisation pour permettre à l'implant de s'adapter aux différentes catégories osseuses.

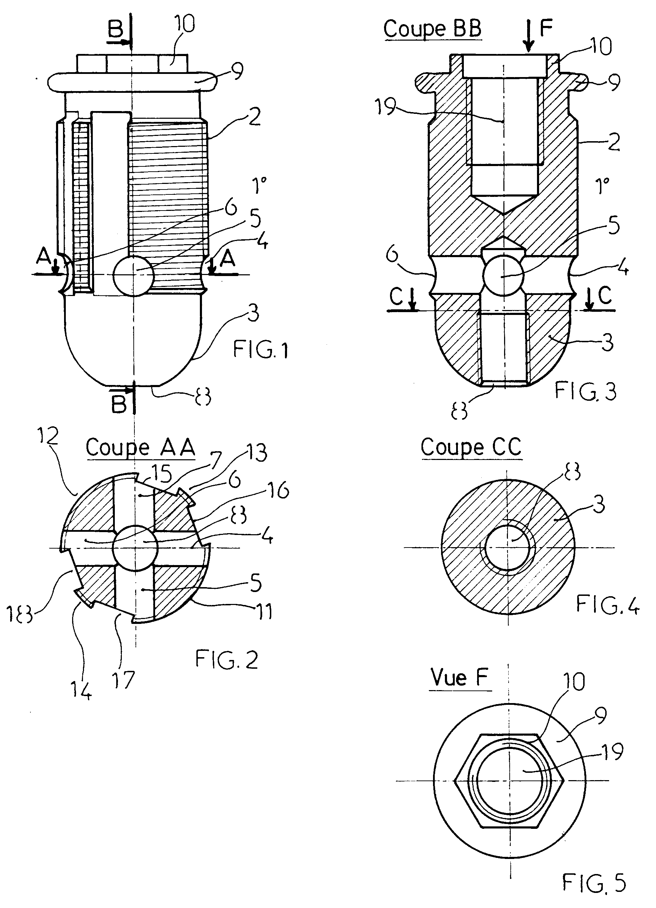

Le brevet GB 2.210.795 décrit deux types d'implant : un premier avec les stries verticales parallèles à l'axe longitudinal de l'implant (voir la figure 12) et un second avec des stries horizontales parallèles à l'axe longitudinal de l'implant (voir la figure 1).

### DIFFERENCES :

L'implant selon l'invention comporte un filetage externe de type hélicoïdale, réalisé au moins en pas fin (<0,50 mm) jusqu'au pas ultrafin 0,25 mm, contrairement au brevet GB 2.210.795, qui comporte quelques stries larges parallèles et non hélicoïdales. La conséquence est qu'en effectuant une rotation de l'implant sur lui-même, selon le grand axe du cylindre, l'implant selon le brevet GB 2.210.795 reste au même niveau ; il est incapable d'avancer (les stries étant parallèles) alors que l'implant selon l'invention avance d'une distance égale au pas de l'hélice lorsqu'on lui fait effectuer une rotation de 360°.

Les différents degrés de dureté de l'os dépendent notamment du site osseux à exploiter, de l'anatomie osseuse de l'édenté à appareiller et de son état.

De manière à s'adapter au site osseux à exploiter, la documentation technique actuelle propose de nombreux implants spécifiques. Ces implants sont conçus chacun pour s'adapter de manière spécifique aux différents degrés de dureté de l'os et au mode d'insertion.

On peut noter : les implants cylindriques creux, les implants vis creux, les implants vis, les implants en deux parties, les implants impactés, les implants à insertion latérale avec appui tricortical, les implants cylindriques dotés d'un corps intra-mobile, les implants cylindriques munis d'ailettes latérales, les implants lames, etc...

L'invention tend à simplifier le travail des stomatologistes et des chirurgiens-dentistes en proposant un seul type d'implant dentaire à pénétration verticale et non plus un choix difficile devant une multitude d'implants.

L'implant selon l'invention permet également au stomatologiste et au chirurgien-dentiste de s'adapter aisément sur le site en découvrant la nature de l'os, tandis qu'actuellement, en cas de surprise, il doit changer d'implant puisque chaque type d'implant est adapté de manière spécifique à différents degrés de dureté de l'os.

Bien entendu, pour un seul type d'implant selon l'invention, il y a plusieurs tailles d'implant (longueurs et diamètres).

L'implant selon l'invention peut :
1/ - **se visser** dans un os très dur qui a été préalablement taraudé, le pas fin et les interruptions de filetage servent à réduire les tensions internes au sein de l'os dense, ce qui évite les risques de nécrose.
2/ - **se visser** dans un os moins dur, par **autotaraudage**,
3/ - **s'impacter**, dans un os tendre, puis s'autotarauder par une rotation quart-de-tour,
4/ - **s'impacter,** dans un os très tendre, par un mouvement de translation axiale.

A cet effet, l'implant selon l'invention est du type constitué d'un corps cylindrique, d'une extrémité apicale arrondie munie d'évents permettant une régénération osseuse interne bloquant définitivement l'implant, d'une extrémité basale (occlusale) formant un écrou hexagonal taraudé en son centre, caractérisé par le fait que le corps cylindrique comporte une succession de parties planes et de parties filetées, qui divisent la hauteur du corps de l'implant verticalement, le filetage externe micrométrique augmente la surface de contact avec l'os ; les parties planes sont micro-rainurées d'usinage horizontalement pour augmenter aussi la surface de contact ; les parties filetées sont disposées à la périphérie de secteurs circulaires du corps du cylindre ; les parties planes sont formées par la base de la section des rainures longitudinales.

L'extrémité apicale est arrondie et lisse, elle comporte un orifice centro-apical à filetage micrométrique interne pour augmenter la surface de contact avec le tissu osseux et quatre orifices latéro-apicaux.

Le corps cylindrique de l'implant comporte deux secteurs:
1) - Un secteur fileté divisé en quatre sections : deux sections larges pour l'autotaraudage et/ou la rétention dans l'os déjà taraudé et deux sections étroites faisant office de rail de guidage lors de l'impactage.
2) - Un secteur plan micro-rainuré divisé en quatre sections par les sections étroites filetées. Ce dispositif permet également lors de l'autotaraudage par l'implant lui-même de faciliter cette opération en réduisant les forces de frottement en permettant un meilleur angle d'attaque. De plus, les rainures axiales permettent l'échappement d'éventuels copeaux osseux et évitent le bourrage. Enfin, ces quatre sections planes interrompront le filetage servant de blocage antirotationnel, une fois la repousse osseuse réalisée.

L'extrémité basale (occlusale) comporte un écrou hexagonal taraudé. Ledit écrou est taraudé de façon micrométrique, afin de permettre le raccordement des pièces prothétiques.

Les dessins ci-joints sont donnés à titre d'exemples indicatifs et non limitatifs. Ils représentent un mode de réalisation préféré selon l'invention. Ils permettront de comprendre aisément l'invention.

La figure 1 est une vue de côté de l'implant selon l'invention.

La figure 2 est une vue en coupe transversale, vue selon l'axe A-A, représenté à la figure 1.

La figure 3 est une vue en coupe longitudinale, vue selon l'axe B-B, représenté à la figure 1.

La figure 4 est une vue en coupe transversale au niveau de l'extrémité apicale, selon l'axe transversal C-C, représenté à la figure 3.

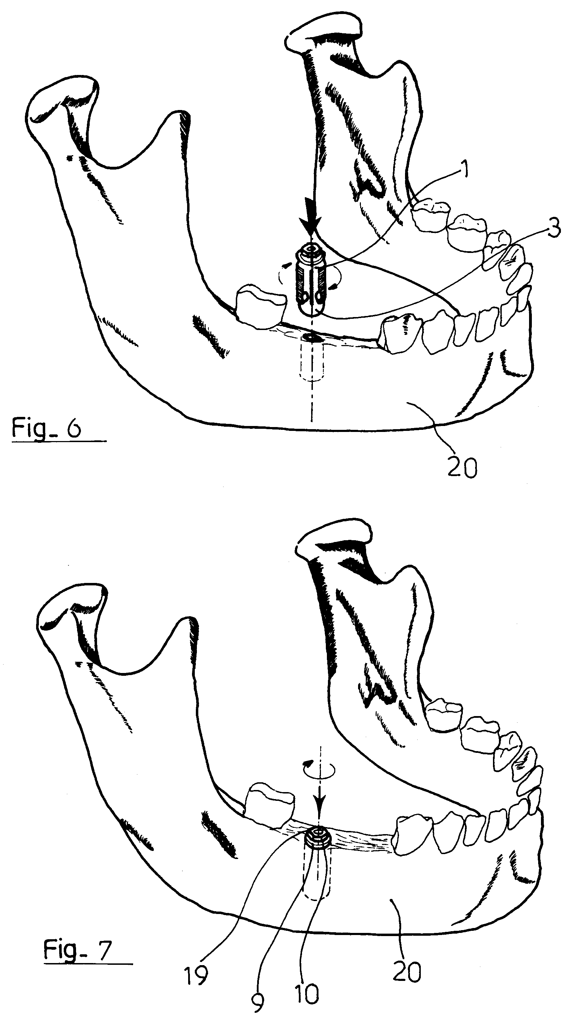

La figure 5 est une vue de l'implant, vue du côté de l'extrémité selon F, représenté à la figure 3.

L'implant 1 selon l'invention est du type constitué d'un corps cylindrique 2, d'une extrémité apicale 3 arrondie, munie d'orifices 4, 5, 6, 7 et 8, et d'une extrémité basale 9 (côté sommet de la crête osseuse) formant un écrou hexagonal 10 taraudé.

Le corps cylindrique 2 comporte deux secteurs : un secteur fileté et un secteur plan.

Un secteur fileté divisé en quatre sections - deux sections filetées larges 11, 12 pour l'autotaraudage et/ou la rétention dans l'os déjà taraudé et deux sections filetées étroites 13, 14 faisant office de rail de guidage lors de l'impactage.

Un secteur plan micro-rainuré divisé en quatre sections 15, 16, 17, 18, par les sections étroites filetées.

L'extrémité basale 9 (côté sommet de la crête osseuse) comporte un écrou 10 hexagonal taraudé, surmontant un épaulement légèrement plus large que le corps servant de butée pour éviter la fusée de l'implant dans un territoire anatomique critique lors de l'impactage. Ledit écrou 10 est taraudé en 19 de façon micrométrique, afin de permettre le raccordement des pièces prothétiques. C'est le seul implant à vissage micrométrique interne qui évite le dévissage intempestif des composants prothétiques.

Les quatre sections planes 15, 16, 17, 18, recouvrent toute la hauteur du corps 2 de l'implant 1 et permettent l'impactage lors de la chirurgie, selon un mouvement de translation. Les deux sections rainurées étroites 13, 14, séparent les sections planes 15, 16, 17, 18, lesdites sections divisent la hauteur du corps 2 de l'implant 1 verticalement et servent de rails de stabilisation directionnelle lors de l'impactage. Ils permettent d'éliminer d'éventuels copeaux lors de l'autotaraudage. De plus, l'interruption du filetage sur le corps de l'implant à l'aide des rainures verticales diminuent les forces de tension au sein de l'os en particulier quand celui-ci est compact, évitant ainsi les nécroses.

La succession de sections filetées 11, 12, 13, 14, et planes 15, 16, 17, 18, permet l'impactage en translation suivi d'un autoblocage en rotation.

En effet, si après avoir taraudé, le chirurgien s'aperçoit que l'os est trop peu dense, il pourra se contenter de pousser l'implant 1 selon une direction axiale. Se faisant, les parties taraudées de l'os 20 (non représentées sur les figures), faisant face aux secteurs filetés 11, 12, 13, 14, de l'implant 1, seront effacées.

Par contre, les parties de l'os 20 faisant face aux-quatre sections planes 15, 16, 17, 18, ne seront pas effacées mais resteront incrustées dans les rainures verticales.

En effet, ces sections planes sont légèrement en retrait par rapport au filetage. Il suffit à la fin de l'impactage de faire subir un quart de tour à l'implant 1, dans le sens des aiguilles d'une montre, pour faire coïncider la partie filetée de l'implant 1 avec la partie de l'os 20 qui est restée taraudée dans l'os et n'a pas été effacée lors de l'impactage. Ceci est une caractéristique technique de l'implant et permet d'obtenir ainsi un blocage vertical immédiat de l'implant 1.

Enfin, les quatre sections planes 15, 16, 17, 18, servent aussi de blocage anti-rotationnel à la fin de la repousse osseuse (environ trois à six mois après la mise en place).

L'extrémité apicale 3 arrondie comporte cinq orifices 4, 5, 6, 7 et 8 :
- un orifice 8 centro-apical à filetage micrométrique interne pour augmenter la surface de contact avec le tissu osseux 20,
- quatre orifices 4, 5, 6, 7, latéro-apicaux. Cette extrémité apicale arrondie et lisse :
- permet l'échappement des fluides (sang) lors de la mise en place de l'implant ; évite toute surpression hydraulique,
- permet la repousse intra-implantaire de l'os. Cette extrémité apicale 3 est lisse sur 2, 5 mm pour éviter d'endommager certains territoires anatomiques critiques (membranes sinusiennes et/ou nasales, nerf dentaire inférieur, etc...) lors de la pénétration voulue ou accidentelle de l'implant.

L'implant selon l'invention est autotaraudant, c'est-à-dire que le filetage externe s'interrompt quatre fois pour laisser une plage libre, constituée par les quatre rails longitudinaux verticaux plats ; cette configuration du corps de l'implant confère à l'implant ses propriétés autotaraudantes.

Ces rails de guidage ont également pour fonction de collecter les fluides circulant dans les spires.

L'implant est microfileté sur toute la hauteur pour augmenter la surface de contact avec le tissu osseux.

### Le microfiletage s'interrompt sur toute la surface en deux zones seulement :

1) au niveau de l'extrémité basale (9) (côté sommet de la crête osseuse) :
   - sur toute la circonférence du cylindre, juste au-dessous du cylindre d'appui, pour éviter l'apparition intempestive de spires au niveau gingival ; ces spires peuvent être la source de maladie péri-implantaire si une récession osseuse venait à apparaître
2) au niveau de l'extrémité apicale (3) :
   - sur environ deux millimètres de toute la surface cylindro sphérique de l'extrémité apicale (3), pour éviter que les spires, en cas de pénétration intempestive, dans un territoire anatomique critique non osseux (canal dentaire, membrane sinusienne ou nasale, tissus mous dans la zone mentonnière) ne viennent déchirer ou traumatiser ces tissus.

En outre, l'implant comporte un système d'évents, ou d'orifices, et de canalisation permettant d'évacuer la pression hydraulique, source d'hypertension au sein du tissu osseux, capable de provoquer une nécrose cellulaire et la perte de l'implant.

Cinq évents ou orifices sont disposés au niveau de l'extrémité apicale :
- quatre orifices 4,5,6,7 situés perpendiculairement à la surface cylindrique constitués de deux cylindres venant se croiser à 90° et traversant l'apex de part en part
- et un orifice 8 unique cylindrique centro-apical disposé perpendiculaire aux deux autres et venant déboucher en leur centre.
Ce dernier orifice 8 cylindrique est fileté intérieurement, ceci pour deux raisons :
- 1/ augmenter la surface de contact avec le tissu osseux après sa repousse dans la partie centrale de l'implant
- 2/ permettre la mise en place d'une tige porte-implant filetée qui évite au chirurgien, ou à ses aides, de manipuler l'implant avec les doigts.

Cet ensemble de perforation (les deux cylindres perpendiculaires à l'implant et le cylindre centro-apical) débouche dans les évents ou rails verticaux. Il permet de collecter les fluides de la région apicale qui sont ainsi évacués vers la zone lisse de l'extrémité basale où s'arrête le filetage, c'est-à-dire juste sous le cylindre ou collerette. Cette zone lisse est le dernier élément du système de drainage des fluides. Elle joue le rôle de collecteur central par lequel s'évacuent la pression hydraulique, les fluides, les gaz et les débris.

L'implant selon l'invention comporte, au niveau de son extrémité basale, une collerette de sécurité, ou cylindre d'appui crestal ; celle-ci a deux rôles :
1. rôle mécanique :
   - appui sur la zone solide constituée par la corticale crestale, alors que l'intérieur de l'os est spongieux
2. butée de sécurité :
   - elle évite la pénétration intempestive en cas d'os spongieux peu dense ou moyennement dense.

En effet, en l'absence de cette collerette, l'implant peut, en particulier, au niveau des sinus, être projeté dans une zone anatomique non souhaitée, lors de sa mise en place. De même, l'action conjuguée du micro-filetage et de la butée de l'extrémité basale permet de contrôler très exactement l'approche au-dessus du nerf dentaire inférieur.

Le cylindre d'appui de l'extrémité basale a une section arrondie (torique) pour éviter les effets de cisaillement au niveau du tissu osseux, lorsque l'implant sera mis en fonction.

L'implant selon l'invention offre la particularité et l'avantage de se présenter déjà monté sur son porte-implant qui est vissé dans l'évent ou orifice centro-apical. De même, le système d'entraînement est déjà prêt à l'emploi, bloqué sur l'hexagone externe de l'implant. Le chirurgien n'a qu'à brancher directement ses instruments pour la mise en place.

Dans certains cas favorables, le système d'entraînement peut être réutilisé comme pilier prothétique. Le porte-implant et le système d'entraînement sont fabriqués dans le même matériau que l'implant lui-même : le titane commercialement pur (>99 %).

### REFERENCES

- 1.: Implant
- 2.: Corps cylindrique
- 3.: Extrémité apicale
- 4. 5. 6. 7. 8.: Orifices ou évents
- 9.: Extrémité basale (côté sommet de la crête osseuse)
- 10.: Ecrou hexagonal
- 11.12.: Sections filetées larges
- 13.14: Sections filetées étroites
- 15. 16. 17. 18.: Sections planes
- 20.: Os ou tissu osseux

## Revendications

1. Implant (1) constitué d'un corps cylindrique (2), d'une extrémité apicale (3) arrondie munie d'évents (4, 5, 6, 7, 8) permettant une régénération osseuse interne bloquant définitivement l'implant (1), d'une extrémité basale occlusale (9) formant un écrou hexagonal (10) taraudé, caractérisé par le fait
que le corps cylindrique (2) comporte une succession de parties planes (15, 16, 17, 18) et de parties filetées (11, 12, 13, 14), qui divisent la hauteur de l'implant (1) verticalement, le filetage externe micrométrique augmente la surface de contact avec l'os (20) ;
que les parties planes (15, 16, 17, 18) sont micro-rainurées d'usinage horizontalement pour augmenter la surface de contact ;
que les parties microfiletées (11, 12, 13, 14) sont disposées à la périphérie des secteurs circulaires du corps du cylindre (2) et les parties planes (15, 16, 17, 18) sont formées par la base de la section des rainures longitudinales.

2. Implant (1) selon la revendication 1, caractérisé par le fait
que l'extrémité apicale (3) est arrondie et lisse, elle comporte un orifice centro-apical (8) à filetage micrométrique interne pour augmenter la surface de contact avec le tissu osseux (20) et quatre orifices (4, 5, 6, 7) latéro-apicaux.

3. Implant (1) selon la revendication 1, caractérisé par le fait
que le corps cylindrique (2) de l'implant (1) comporte deux secteurs :
1) - un secteur fileté divisé en quatre sections (11, 12, 13, 14) - **deux sections larges microfiletées** (11, 12) pour l'autotaraudage et/ou la rétention dans l'os (20) déjà taraudé et **deux sections étroites microfiletées** (13, 14) faisant office de rail de guidage lors de l'impactage, et permettant l'échappement des copeaux lors de l'autotaraudage.
2) - un secteur plan micro-rainuré divisé en quatre sections (15, 16, 17, 18) par les sections étroites filetées (13, 14).

4. Implant (1) selon la revendication 2, caractérisé par le fait
que cinq évents 4,5,6,7,8 ou orifices sont disposés au niveau de l'extrémité apicale :
- quatre 4,5,6,7 situés perpendiculairement à la surface cylindrique constitués de deux cylindres venant se croiser à 90° et traversant l'apex de part en part
- et un orifice unique 8 cylindrique centro-apical disposé perpendiculaire aux deux autres et venant déboucher en leur centre.

5. Implant (1) selon la revendication 1, caractérisé par le fait
que l'extrémité basale occlusale (9) comporte un écrou hexagonal (10) taraudé, ledit écrou (10) est taraudé de façon micrométrique, afin de permettre le raccordement des pièces prothétiques, ledit écrou hexagonal (10) surmonte une collerette légèrement plus large formant une butée.

6. Implant (1) selon la revendication 1, caractérisé par le fait
que le microfiletage s'interrompt sur toute la surface en deux zones seulement :
1) au niveau de l'extrémité basale occlusale (9)
- sur toute la circonférence du cylindre, juste au-dessous du cylindre d'appui,
2) au niveau de l'extrémité apicale (3):
- sur environ deux millimètres de toute la surface cylindro sphérique de l'extrémité apicale (3)

## Claims

1. Implant (1) made of a cylindrical body (2), a rounded tip end (3) provided with holes (4, 5, 6, 7) which allow the internal regeneration of bone locking definitely the implant (1), an occludent base end (9) forming a hexagonal, threaded nut (10), characterized in
that the cylindrical body (2) comprises a series of plane parts (15, 16, 17, 18) and threaded parts (11, 12, 13, 14) vertically dividing the height of the implant (1), the micrometrical male threads increasing the contact surface with the bone (20);
that the plane parts (15, 16, 17, 18) are horizontally micro-grooved by machining for increasing the contact surface;
that the microthreaded parts (11, 12, 13, 14) are disposed at the periphery of circular sectors of the cylindrical body and the plane parts are (15, 16, 17, 18) formed by the base of longitudinal grooves.

2. Implant according to claim 1, characterized in
that the tip end (3) is rounded an smooth and comprises a mid-tip opening (8) having female micrometrical threads for increasing the contact surface with the bone (20) tissue and four openings (4, 5, 6, 7) lateral to the tip.

3. Implant according to claim 1, characterized in
that the cylindrical body (2) of the implant (1) comprises two sectors:
1) - a threaded sector divided in four sections (11, 12, 13, 14) - **two large microthreaded sections** (11, 12) for self-cutting the threads and/or for the retention in the bone (20) already threaded, and **two narrow microthreaded sections** (13, 14) serving as guide rail during the impact insertion and allowing the escape of chips during the self-cutting of the threads.
1) - a plane microgrooved sector divided in four sections (15, 16, 17, 18) by the narrow microthreaded sections (13, 14).

4. Implant according to claim 2, characterized in
that five holes 4, 5, 6, 7, 8 or openings are disposed at the level of the tip end:
- four 4, 5, 6, 7 are disposed perpendicularly at the cylindrical surface and are formed by two cylinders crossing each other at 90° and fully passing the tip, and
- a single cylindrical mid-tip opening (8) disposed perpendicularly to the others and joining their centre.

5. Implant according to claim 1, characterized in
that the occludent base end (9) comprises a threaded hexagonal nut (10), said nut (10) being micrometrically threaded in order to permit the joining up of prosthetic pieces, said hexagonal nut (10) surmounting a larger collar forming a stop.

6. Implant according to claim 1, characterized in
that the microthreads are interrupted in two zones only of the complete surface:
1) at the level of the occludent base end (9):
- on the complete circumference of the cylinder just under the support cylinder,
2) at the level of the tip end (3):
- on approximately two millimeters of the complete cylindrical/spherical surface of the tip end (3).

## Patentansprüche

1. Implantat (1) aus einem zylindrischen Körper (2), einem abgerundeten Spitzende (3), das mit Löchern (4, 5, 6, 7, 8) versehen ist, die eine interne Knochenregeneration gestatten, die endgültig das Implantat (1) blockiert, und mit einem verschließenden Grundende (9), das eine mit Innengewinde versehene Sechskantmutter (10) bildet, dadurch gekennzeichnet,
daß der zylindrische Körper (2) eine Folge von ebenen Teilen (15, 16, 17, 18) und von mit Außengewinde versehenen Teilen (11, 12, 13, 14) aufweist, die die Höhe des Implantats (1) vertikal aufteilen, wobei das mikrometrische Außengewinde die Berührungs-Oberfläche mit dem Knochen (20) vergrößert;
daß die ebenen Teile (15, 16, 17, 18) horizontal mit spanend eingebrachten Mikrorillen versehen sind, um die Berührungsfläche zu erhöhen;
daß die mit Mikrogewinde versehenen Abschnitte (11, 12, 13, 14) am Umfang kreisförmiger Sektoren des zylindrischen Körpers (2) angeordnet sind, und die ebenen Teile (15, 16, 17, 18) durch den Grund des Querschnittes von Längsrillen gebildet sind.

2. Implantat (1) nach Anspruch 1, dadurch gekennzeichnet,
daß das Spitzende (3) abgerundet und glatt ist sowie eine in der Mitte der Spitze angeordnete Öffnung (8) mit mikrometrischem Innengewinde aufweist, um die Berührungsfläche mit dem Knochengewebe (20) zu vergrößern, sowie vier seitlich von der Spitze angeordnete Öffnungen (4, 5, 6, 7).

3. Implantat (1) nach Anspruch 1, dadurch gekennzeichnet,
daß der zylindrische Körper (2) des Implantats (1) zwei Sektoren aufweist:
1) - einen in vier Abschnitte (11, 12, 13, 14) unterteilten, mit Außengewinde versehenen Sektor: - **zwei grosse, mit Mikro-Außengewinde versehene Abschnitte** (11, 12) für das selbstschneidende Gewindeschneiden und/oder die Halterung in dem bereits mit mit Innengewinde versehenen Knochen (20), sowie **zwei schmale, mit Mikro-Außengewinde versehene Abschnitte** (13, 14), die als Führungsschiene während des Einschlagens dienen und das Frei kommen von Spänen während des selbstschneidenden Einschraubens gestatten.
2) - einen ebenen, mit Mikrorillen versehenen Sektor, der in vier Abschnitte (15, 16, 17, 18) durch die schmalen, mit Außengewinde versehenen Abschnitte (13, 14) unterteilt ist.

4. Implantat (1) nach Anspruch 2, dadurch gekennzeichnet,
daß fünf Löcher 4, 5, 6, 7, 8 oder Öffnungen auf der Höhe des Spitzendes angeordnet sind:
- vier 4, 5, 6, 7 sind senkrecht an der zylindrischen Fläche gelegen und von zwei Zylindern gebildet, die sich unter 90° kreuzen und die Spitze hindurchgehend durchsetzen, und
- eine einzige, zylindrische, mittig zur Spitze gelegene Öffnung 8, die senkrecht zu den beiden anderen angeordnet ist und in deren Mitte einmündet.

5. Implantat (1) nach Anspruch 1, dadurch gekennzeichnet,
daß das verschließende Grundende (9) eine mit Innengewinde versehene Sechskantmutter (10) aufweist, die genannte Mutter (10) mit mikrometrischem Innengewinde versehen ist, um die Aufnahme von Protheseteilen zu gestatten, und die genannte Sechskantmutter (10) einen ein wenig größeren Kragen überragt, der einen Anschlag bildet.

6. Implantat (1) nach Anspruch 1, dadurch gekennzeichnet,
daß das Mikrogewinde auf der gesamten Oberfläche nur in zwei Zonen unterbrochen ist:
1) auf der Höhe des verschließenden Grundendes (9):
- auf dem gesamten Umfang des Zylinders unmittelbar unter dem Auflagezylinder, und
2) auf der Höhe des Spitzendes (3):
- auf etwa zwei Millimetern der gesamten zylindrisch-kugeligen Oberfläche des Spitzendes (3).
